# EUROPEAN PATENT SPECIFICATION

(11) **EP 0 789 180 B1**
(45) Date of publication and mention of the grant of the patent: **29.08.2001**
(21) Application number: 97200935.1
(22) Date of filing: 02.11.1995
(51) Int. Cl.: F16L 55/162

(54) **Method of lining the internal surface of a pipe**
Verfahren zur Innenbeschichtung eines Rohres
Méthode de revêtement de la surface intérieure d'un tuyau

(30) Priority: 14.11.1994 JP 27925394; 29.03.1995 JP 7194695; 16.10.1995 JP 26749195
(43) Date of publication of application: 13.08.1997
(62) Divisional of application: 95307817.7
(73) Proprietor: TOKYO GAS CO., LTD., Minato-ku, Tokyo 105-0022 (JP)
(72) Inventor: Yagi, Shuichi, 503, 3rd Ekureru Myorenji Bldg, Tsurumi-ku, Yokohama-shi, Kanagawa-ken (JP); Itagaki, Masaaki, Konan-ku, Yokohama-shi, Kanagawa-ken (JP)
(74) Representative: Brookes Batchellor

(56) References cited:
- US-A- 3 041 204
- PATENT ABSTRACTS OF JAPAN vol. 008, no. 138 (C-231), 27 June 1984 & JP 59 049870 A (KANKIYOU KAIHATSU:KK;OTHERS: 01), 22 March 1984,
- PATENT ABSTRACTS OF JAPAN vol. 010, no. 126 (M-477), 10 May 1986 & JP 60 253626 A (NIPPON DENSHIN DENWA KOSHA;OTHERS: 01), 14 December 1985,
- PATENT ABSTRACTS OF JAPAN vol. 008, no. 162 (C-235), 26 July 1984 & JP 59 062375 A (THREE BOND KK;OTHERS: 01), 9 April 1984,
- PATENT ABSTRACTS OF JAPAN vol. 012, no. 405 (C-539), 26 October 1988 & JP 63 143966 A (OSAKA GAS CO LTD), 16 June 1988,
- PATENT ABSTRACTS OF JAPAN vol. 012, no. 037 (C-473), 4 February 1988 & JP 62 186968 A (OSAKA BOSUI KENSETSUSHIYA:KK), 15 August 1987,

## Description

The present invention relates to a method of lining the internal surface of a pipe, particularly to a method of lining the internal surface of an existing underground gas pipe, a water pipe, etc. for the purpose of internal surface repair or rehabilitation.

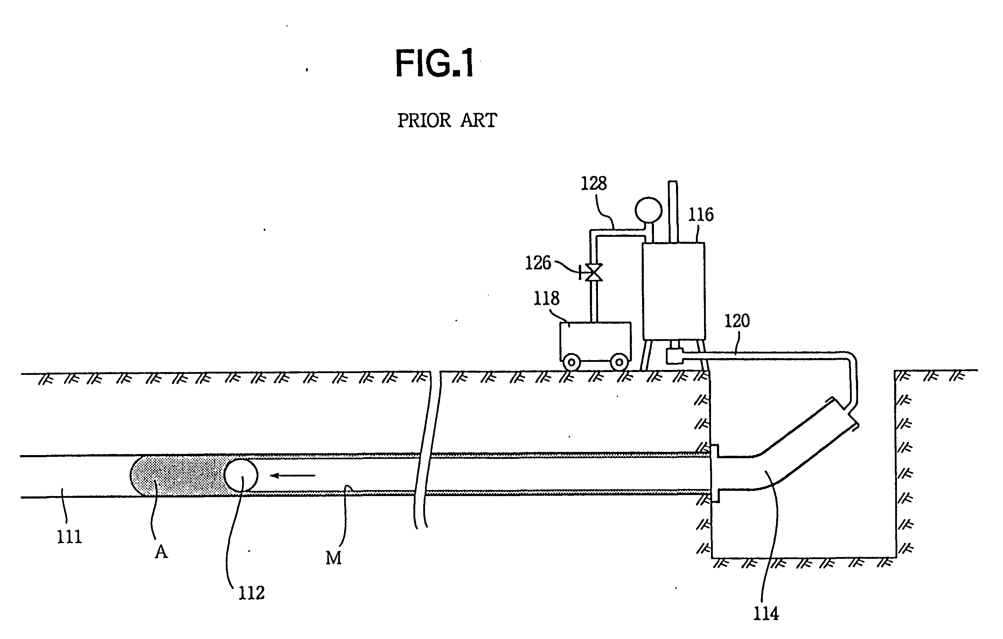

There has been known a pipeline resin lining method as illustrated in Fig. 1 of the accompanying drawings, in which a necessary amount of resin A and a spherical lining pig 112 are introduced into an existing underground pipe 111 and are moved forward through the pipe, so that a resin lining layer M is formed on the internal surface of the pipe 111.

In detail, using equipments as illustrated in Fig. 1, a valve 126 is opened and an air blower 118 is switched on, so that a necessary amount of resin received in a resin tank 116 is injected into the underground pipe 111 through a resin supply hose 120 and an inlet pipe section 114. Then, the spherical lining pig 112 is inserted into the pipe 111 by temporarily detaching one end of the hose 120 from the inlet pipe section 114. Subsequently, by continually operating the air blower 118, a pressurised air is supplied into the pipe 111 behind the resin A and the lining pig 112 through the same path. In this way, the resin A and the lining pig 112 are driven through the pipe 111 along the entire length thereof, so that the resin lining layer M is formed on the internal surface of the pipe 111.

A similar method is known from US-A-3 041 204.

The above-mentioned methods prove to be ineffective to perform a resin-lining treatment on an existing underground pipe which has a portion of larger diameter than the rest of the pipe. One method for lining such a pipe is to use two pigs with a necessary amount of resin placed therebetween.
The front pig is of a spherical shape having a larger diameter than the pipe inner diameter and is made of a resilient material. While the two pigs are being air-driven through the pipe with the resin carried therebetween, a resin lining layer is formed on the internal surface of the pipe, by means of the rear pig which has a smaller diameter than the pipe inner diameter. However, when the front larger resilient pig enters a larger diameter portion, some residual air remaining in the inner corners of the larger diameter portion cannot smoothly escape therefrom because of a tight contact between the pig surface and the interior surface of the larger diameter portion, resulting in that some parts of the interior surface of the large diameter portion are not coated with the resin.

An object of the present invention is to provide an improved pipe lining method capable of successfully lining a pipe involving a larger diameter portion, without the problem of an unlined part of the surface of the larger diameter portion of the pipe.

According to the present invention there is provided a method of lining the internal surface of a pipe which has a first portion connected to a second portion of larger diameter; said method comprising the steps of
inserting a first pig into the first portion of the pipe from an open end thereof;
introducing a necessary amount of resin into the first portion behind the fist pig;
inserting a second pig into the first portion of the pipe behind the resin,
applying a positive pressure behind the second pig in the pipe to cause the first and second pigs and the resin to move through both portions of the pipe so that the second pig forms a resin lining layer on the internal surface of the pipe;
wherein the first pig is of resilient material and is of spherical form with a natural diameter greater than the diameter of both portions of the pipe so that it is in a compressed state as it moves through the pipe, and
characterised in that said pig has a plurality of grooves formed on the surface thereof, said grooves extending in different directions around the surface of the pig and intersecting one another, so that when the pig is in the second portion of the pipe, air is permitted to pass easily between the pig and the internal surface of the pipe.

In order that the invention may be more readily understood it will now be described, by way of example only, with reference to the accompanying drawings, in which:
Fig. 1 is an explanatory view illustrating a conventional method of lining the internal surface of an existing underground pipe;
Fig. 2 is an explanatory view illustrating a method of lining the internal surface of an existing underground pipe having first and second portions of different diameters; and
Fig. 3 is a view illustrating first and second pig members used in accordance with the present invention.

In the prior art arrangement shown in Fig. 1, the pipe 111 is of substantially constant diameter along its length. A single pig 112 is employed to form the resin lining M on the internal wall of the pipe.

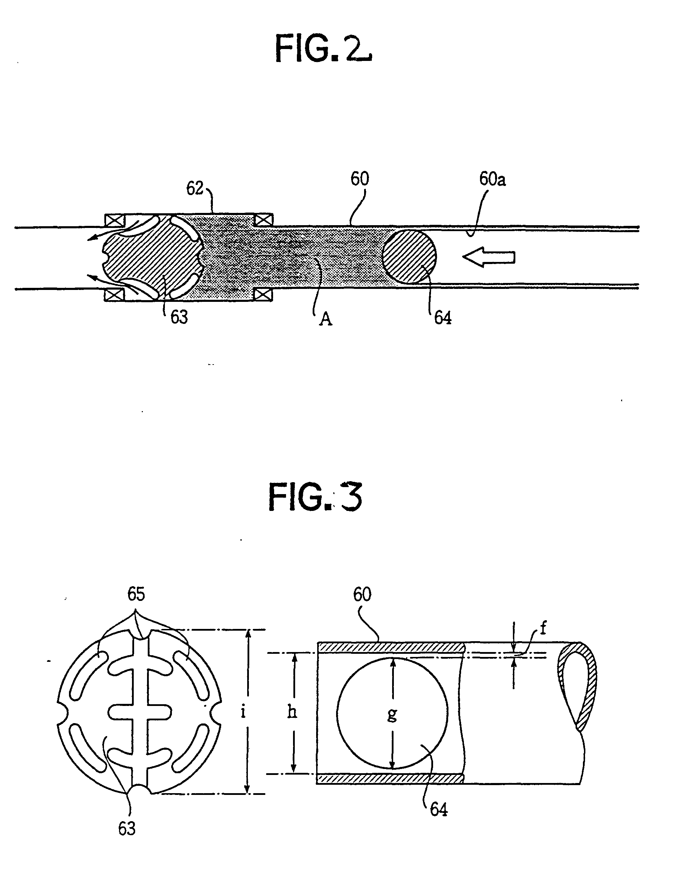

As shown in Fig. 2, the pipe 60 has a first portion connected to a second portion 62 which is of greater diameter than that of the first portion.

In operation, a first or front pig 63 is introduced into the pipe 60 from an open end thereof, then a necessary amount of resin A for lining the internal surface of the pipe 60 is injected behind the first pig 63 into the pipe 60. Afterwards, a second or rear pig 64 is inserted behind the resin A into the pipe 60. Subsequently, a positive pressure j provided and applied behind the second pig 64 in the pipe 60, so that the first pig 63, the resin A and the second pig 64 an forced to move through the pipe 60 along the entire length thereof. Thus, a resin lining layer 60a is formed on the internal surface of the pipe 60, by means of the second pig 64.

As shown in Fig. 3, the first pig 63 is a spherical body made of a resilient material having a diameter i larger than the pipe inner diameter h and having a number of grooves 65 formed on the spherical surface thereof in a predetermined arrangement. On the other hand, the second pig 64 has a diameter g smaller than the pipe inner diameter h of the first pipe portion, such that a resin lining layer having a desired thickness f may be formed on the internal surface of the pipe 60.

Referring again to Fig. 2, when the first pig 63, the resin A and the second pig 64 are moving through the first portion of the pipe 60 (having not yet arrived at the larger diameter portion 62 such as an expansion joint), the first pig 63 is moving with itself under a compressed condition. On the other hand, when the pig 63 and the resin A arrive at the larger diameter portion 62, although the first pig 63 will still get into a tight contact with the interior surface of the larger diameter portion 62, some residual air remaining in the inner corners of the larger diameter portion 62 is allowed to smoothly escape forwardly, by way of the many grooves 65 formed on the surface of the first pig 63. In this way, the larger diameter portion 62 is completely filled with the resin A, thus its interior surface may be properly coated with the resin.

## Claims

1. A method of lining the internal surface of a pipe which has a first portion connected to a second portion of larger diameter; said method comprising the steps of
inserting a first pig into the first portion of the pipe from an open end thereof;
introducing a necessary amount of resin into the first portion behind the fist pig;
inserting a second pig into the first portion of the pipe behind the resin,
applying a positive pressure behind the second pig in the pipe to cause the first and second pigs and the resin to move through both portions of the pipe so that the second pig forms a resin lining layer on the internal surface of the pipe;
wherein the first pig is of resilient material and is of spherical form with a natural diameter greater than the diameter of both portions of the pipe so that it is in a compressed state as it moves through the pipe, and
**characterised in that** said pig has a plurality of grooves formed on the surface thereof, said grooves extending in different directions around the surface of the pig and intersecting one another, so that when the pig is in the second portion of the pipe, air is permitted to pass easily between the pig and the internal surface of the pipe.

## Patentansprüche

1. Ein Verfahren zur Beschichtung der inneren Oberfläche eines Rohres, welches einen ersten Abschnitt, verbunden an einen zweiten Abschnitt mit einem größeren Durchmesser, aufweist; das Verfahren umfassend die Schritte,
Einführen eines ersten Molches in den ersten Abschnitt des Rohres durch ein offenes Ende davon;
Einführen einer notwendigen Menge an Harz in den ersten Abschnitt hinter den ersten Molch;
Einführen eines zweiten Molches in den ersten Abschnitt des Rohres hinter das Harz;
Anwenden eines positiven Druckes hinter den zweiten Molch in dem Rohr, um zu bewirken, daß der erste und zweite Molch sowie das Harz durch beide Abschnitte des Rohres bewegt werden, so daß der zweite Molch eine Harzbeschichtungsschicht auf der inneren Oberfläche des Rohres bildet,
wobei der erste Molch aus einem elastischen Material besteht und eine kugelförmige Form hat, mit einem natürlichen Durchmesser, der größer ist als der Durchmesser von beiden Abschnitten des Rohres, so daß er sich in einem kompressierten Zustand befindet, wenn er sich durch das Rohr bewegt,
**dadurch gekennzeichnet**, daß der Molch eine Vielzahl von Rillen aufweist, die auf dessen Oberfläche gebildet sind, wobei sich die Rillen in unterschiedlichen Richtungen um die Oberfläche des Molches erstrecken und sich jeweils überschneiden, so daß, wenn der Molch sich in dem zweiten Abschnitt des Rohres befindet, Luft ermöglicht wird, einfach zwischen dem Molch und der inneren Oberfläche des Rohres hindurchzutreten.

## Revendications

1. Procédé pour revêtir la surface intérieure d'un tuyau qui a un premier tronçon raccordé à un second tronçon de plus grand diamètre ; ledit procédé comprenant les étapes consistant à :
insérer un premier racleur dans le premier tronçon du tuyau à partir d'une extrémité ouverte de celui-ci ;
introduire la quantité de résine nécessaire dans le premier tronçon derrière le premier racleur ;
insérer un second racleur dans le premier tronçon du tuyau derrière la résine ;
appliquer une pression positive derrière le second racleur dans le tuyau pour déplacer les premier et second racleurs et la résine à travers les deux tronçons du tuyau, de telle sorte que le second racleur forme une couche de revêtement en résine sur la surface intérieure du tuyau ;
dans lequel le premier racleur est fabriqué en un matériau élastique et est de forme sphérique avec un diamètre naturel supérieure au diamètre des deux tronçons du tuyau, de telle sorte qu'il soit dans un état comprimé lorsqu'il se déplace à travers le tuyau, et
**caractérisé en ce que** ledit racleur présente une pluralité de gorges formées sur sa surface, lesdites gorges s'étendant dans des directions différentes autour de la surface du racleur et se coupant les unes les autres, de telle sorte que lorsque le racleur se trouve dans le second tronçon du tuyau, on laisse passer de l'air facilement entre le racleur et la surface intérieure du tuyau.
